# EUROPEAN PATENT SPECIFICATION

(11) **EP 1 638 083 B1**
(45) Date of publication and mention of the grant of the patent: **22.04.2009**
(21) Application number: 04022198.8
(22) Date of filing: 17.09.2004
(51) Int. Cl.: G10L 21/02

(54) **Bandwidth extension of bandlimited audio signals**
Bandbreitenerweiterung von bandbegrenzten Tonsignalen
Extension de la largeur de bande de signaux audio à bande limitée

(43) Date of publication of application: 22.03.2006
(73) Proprietor: Harman Becker Automotive Systems GmbH, 76307 Karlsbad (DE)
(72) Inventor: Iser, Bernd, 89077 Ulm (DE); Schmidt, Gerhard Uwe, 89081 Ulm (DE)
(74) Representative: Grünecker, Kinkeldey, Stockmair & Schwanhäusser Anwaltssozietät

(56) References cited:
- US-A- 5 978 759
- US-A1- 2001 044 722
- US-A1- 2002 138 268
- BERND ISER ET AL: "Neural Networks Versus Codebooks in an Application for Bandwidth Extension of Speech Signals" EUROSPEECH 2003, September 2003 (2003-09), page 565, XP007006632 GENEVA
- SCHNITZLER J: "A 13.0 kbit/s wideband speech codec based on SB-ACELP" IEEE INTERNATIONAL CONFERENCE ON ACOUSTICS, SPEECH AND SIGNAL PROCESSING, ICASSP '98, PROCEEDINGS, 12 May 1998 (1998-05-12), - 15 May 1978 (1978-05-15) pages 157-160, XP010279148 SEATTLE, WA, USA ISBN: 0-7803-4428-6
- EPPS AND W H HOLMES J: "SPEECH ENHANCEMENT USING STC-BASED BANDWIDTH EXTENSION" PROC. INTERNATIONAL CONFERENCE ON SPOKEN LANGUAGE PROCESSING, October 1998 (1998-10), page P711, XP007000515 SYDNEY, AUSTRALIA

## Description

### Field of Invention

The present invention relates to processing of bandlimited audio signals and is particularly concerned with bandwidth extension by synthetic audio signal generators operating at the transmission cycle rate. More particular, the invention relates to processing of bandlimited audio signals in form of speech signals.

### Prior Art

The transmission of audio signals often occurs with some bandwidth limitations. Different from natural face-to-face speech communication which covers a frequency range from approximately 20 Hz to 20 kHz, telephone communication by telephones or cellular phones is characterized by a limited bandwidth. The common telephone bandlimited (narrowband) audio and, in particular, speech signals show a bandwidth of only 300 Hz - 3.4 kHz. Since the removal of signals with lower and higher frequencies cause a degradation in speech quality, in particular, manifested in a reduced intelligibility, it would be a benefit to be obtained by extending the limited bandwidth to a wider bandwidth.

Possible solutions for the problem of enhancing telephone bandwidths are the combination of two or more bandlimited speech channels or the utilization of so-called wideband speech codes. This method, however, not only demands for service modifications but also undesirably increases costs.

Thus, it is highly preferable to provide an enhanced bandwidth at the receiver side of the communication. Due to the very nature of the human vocal tract, there is some correlation between a bandlimited speech signal and those frequency parts of the original utterance that are missing due to band restrictions. Consequently, promising methods of bandwidth extension comprise the synthesizing of wideband speech signals from bandlimited speech signals.

Extension of the bandwidth may be achieved without any speech signal analysis, e.g., by direct spectral folding of the input bandlimited speech signal supplemented by high-pass filtering to generate a wideband speech signal. Instead of simple spectral folding, non-linear processing as, e.g., wave form rectification after interpolation of the bandlimited speech signal may be employed to obtain wideband speech signals. Whereas such direct conversion techniques are easy to employ, they usually show poorer results as compared to methods making use of speech signal analysis.

Common systems that make use of speech signal analysis to generate a wideband speech signal from a limited telephone speech signal generally perform at least two processing steps. In the first step the wideband spectral envelope is estimated from the determined bandlimited envelope extracted from the bandlimited speech signal.

In general, lookup tables or code books (see "A New Technique for Wideband Enhancement of Coded Bandlimited Speech," by J. Epps and W.H. Holmes, IEEE Workshop on Speech Coding, Conf. Proc., p. 174, 1999), which define correspondences between bandlimited and wideband spectral envelope representations of speech signals, are designed during a training phase that is rather computer time and memory consuming. The closest wideband spectral envelope representation of the extracted bandlimited spectral envelope representation of the received speech signal has to be identified in the code book and then to be used to synthesize the required wideband speech signal.

The construction of the code books may, as ,e.g., in US 5,455,888, be achieved by means of a Linear Predictive Coding (LPC) analysis. LPC coefficients are extracted from wideband training signals. These signals are band-pass filtered and the LPC coefficients of the resulting bandlimited signals are also extracted allowing to establish a correspondence between the LPC representations of the bandlimited and the wideband signal.

In the second step a wideband excitation signal is to be generated from the received bandlimited speech signal. The excitation signal ideally represents the signal that would be detected immediately at the vocal chords, i.e., without modifications by the whole vocal tract, sound radiation characteristics from the mouth etc. The excitation signal may be modeled, e.g. by non-linear characteristic curves (see "Spectral Widening of the Excitation Signal for Telephone-Band Speech Enhancement", IWANEC 2001, Conf. Proc., p. 215, 2001), or on the basis of the pitch and power of the bandlimited excitation signal US 5,455,888. In order to extend the bandwidth of the telephone band the modeled excitation signal is then shaped with the estimated wideband spectral envelope and added to the bandlimited signal.

US 5,978,759 discloses an apparatus for expanding narrow band speech signals by adding a signal of a frequency range outside the bandwidth of a narrow band speech signal on the basis of extracted features from the narrow band speech signal.

The US Patent Applications US 2001/044722 A1 and US 2002/138268 A1 teach expansion of a narrow band speech signal downward into a lower frequency band wherein the narrow band speech signal is analyzed to generate one or more parameters used for synthesizing the lower frequency band signal portion. According to the disclosure in these documents the synthesized lower frequency band signal is combined with a second narrow band speech signal obtained by upsampling the narrow band speech signal. According to the disclosure of US 2002/138268 A1 an extended bandwidth speech signal which has a higher sampling rate than the input narrow band speech signal is generated.

All of the above mentioned methods have in common that the signal processing is based on frames or blocks that consist of a predetermined number of contiguous samples of speech. The relevant signal parameters determined during the speech analysis as, e.g., the formants, the pitch, the mean power and the spectral envelope, are assumed to be constant over the time period of a frame which is typically some 20 ms. The frames are chosen commonly to be overlapping with each other by up to 50 % resulting in a typical temporal offset of some 10 ms or more.

This time delay in the signal processing can lead to annoying artifacts caused by a discontinuous modeling of amplitudes and/or frequencies and/or phases, in particular, in communication with a high temporal variability. Moreover, in the case of hands-free telephone communication the finite delay in the signal path introduced by the systems of the art is undesirably complemented by the delay of the transmission path.

Thus, despite the recent developments and improvements in extending bandlimited telephone communications, there is obviously still a need for an improved audio and, in particular, speech signal processing comprising an effective bandwidth extension. It is therefore the problem underlying the present invention to overcome the above-mentioned drawbacks and to provide a system and a method for speech processing of bandlimited speech communication with an effectively extended bandwidth synthesized at the receiver side.

### Description of the Invention

The problem is solved by a system according to Claim 1 and a method according to Claim 12. The inventive system for bandwidth extension of bandlimited audio signals comprises analyzing means configured to analyze bandlimited audio signals at a transmission cycle rate and to obtain at least one bandlimited parameter at the transmission cycle rate, mapping means configured to obtain at least one wideband parameter based on the at least one bandlimited parameter and an audio signal generating means configured to generate a highband and/or lowband audio signal on the basis of the at least one wideband parameter at the transmission cycle rate.

The inventive system further comprises a controlling means configured to receive the at least one bandlimited parameter and to control the mapping means (14) to obtain at least one wideband parameter at an event rate that is lower than the transmission cycle rate, and only if at least one particular condition is fulfilled.

Accordingly, one may distinguish a real-time processing part, working on the transmission cycle rate basis, and an asynchronous part of the system. The real-time processing part performs receiving and analyzing of the bandlimited audio signal and the generating of the highband and/or lowband audio signals. A controlling means may operate asynchronously in the sense that it controls the mapping means to obtain at least one wideband parameter not at the transmission cycle rate but rather at a lower rate which is termed 'event rate'. Thereby, the processor load can significantly be reduced.

According to the present invention and different from the art, both the bandlimited audio signal is analyzed at the transmission cycle rate and the highband and/or lowband audio signals as well as the combined wideband audio signal are generated on the transmission cycle rate basis. By 'highband' and 'lowband' those parts of the frequency spectrum are meant, that are synthesized in addition to the received limited band. If, e.g., the bandlimited signal shows a frequency range from 300 Hz to 3,4 kHz, the lowband and the highband signals may show frequency ranges from 50 - 300 Hz and from 3,4 kHz to a predefined upper frequency limit with a maximum of half of the sampling rate, respectively.

Usual systems for bandwidth extension operate on a block or frame basis. For a typical sampling rate of 8 kHz, analyzing and wideband audio synthesizing is carried out for frames of typically about 20 ms, i.e. containing some 160 contiguous samples of audio data. Consequently, the conventional overall signal processing shows some delay, whereas according to the present invention signal processing may be performed with no or almost no delay. What is more, even if the verbal utterances of the sending party show a high temporal variability, a continuous synthesizing of the wideband audio signals with respect to amplitude, frequency and phase is provided by the present inventive system.

The present invention is of particular use for bandwidth extension in speech telecommunication that shows an improved intelligibility and naturalness of the received voice.

In particular, the operation of the analyzing means and the audio signal generating means at the transmission cycle rate allows for an almost or ideally completely delay-free voice communication with a continuous synthesizing of amplitudes, frequencies and phases of the wideband audio and, in particular, speech signals. Whereas it is understood that the invention if of use for the processing of audio signals, in general, a prominent application is seen in the extension of bandlimited speech signals.

The audio or speech analyzing means desirably estimates the pitch of the voice and extracts the bandlimited excitation signal and the bandlimited spectral envelope and provides the associated bandlimited parameters. In general, the bandlimited parameters are parameters that are characteristic for, e.g., the determination of bandlimited spectral envelopes, the pitch, the short-time power, the highband-pass-to-lowband-pass power ratio and the signal-to-noise ratio. Accordingly, the wideband parameters comprise parameters for the wideband audio signal corresponding to the bandlimited parameters as, e.g., wideband spectral envelopes, characteristic parameters for the determination of wideband spectral envelopes and wideband excitation signals.

Some pre-processing, as increasing the sample rate by interpolation, may be performed before analyzing. In order to keep the processor load relatively low, it may be preferred to implement recursive algorithms in the analyzing means.

For example, the method of Linear Predictive Coding (LPC) can be used to extract the bandlimited spectral envelope. According to this method the n-th sample of a time signal *x(n)* can be estimated from *M* preceding samples as $x \left(n\right) = {\sum }_{k = 1}^{M} {a}_{k} \left(n\right) ⋅ x ⁢ \left(n-k\right) + e \left(n\right)$ with the coefficients *aₖ(n)* that are to be optimized in a way to minimize the predictive error signal *e(n).* The optimization can be done recursively by, e.g., the Least Mean Square algorithm. The corresponding wideband spectral envelope can be assigned to the extracted bandlimited spectral envelope, e.g., by some non-linear mapping means (see below).

Based on the analysis of the bandlimited speech signal a wideband excitation signal can be generated. This wideband excitation signal can subsequently be shaped by the estimated wideband spectral envelope to generate a wideband speech signal.

Several other speech analysis procedures may be performed by the speech analyzing means and can be used for the subsequent synthesizing of low-band/highband speech signals complementing the transmitted bandlimited speech signal. Among others, advantageously the short-time power, the actual Signal-to-Noise Ratio SNR, the highband-pass-to-lowband-pass power ratio, and signal nullings can be determined and a classification with respect to voiced and unvoiced portions of the detected speech signal can be carried out.

The systems also comprise advantageously a combination means configured to receive the bandlimited audio signal and the highband and/or lowband audio signal generated by the audio signal generating means at the transmission cycle rate and to combine the bandlimited audio signal and the highband and/or lowband audio signal to a wideband audio signal at the transmission cycle rate.

Moreover, it is not necessary to obtain wideband parameters in any case, but only, if, e.g., a significant modification of the audio signal occurs and accordingly, the generation of the highband and/or lowband audio signals has to be modified.

The controlling means may control the audio signal generating means to adapt to nominal values for parameters, in particular, frequency, phase and amplitude, that are needed to generate highband and/or lowband audio signals, and wherein the nominal values are modified based on the at least one wideband parameter at the event rate.

Whereas the audio or speech signal generating is performed on the cycle rate basis according to the present invention, i.e. the audio or speech signal generating means operate in real-time with the actual values of, e.g., the frequencies and the amplitudes, it might be advantageous to modify the nominal values, the audio signal generating means have to adapt to, at a lower rate than the transmission cycle rate.

According to the present invention it is highly desirable that the audio signal generating means are controlled to adapt to the nominal values with a limit maximum increment for every transmission cycle, wherein the maximum increment, in particular, is based on the temporal variability of speech generation.

The signal generating means, in particular, the sine generators operate continuously but advantageously do not adapt immediately to the nominal values obtained by the preceding analysis but with a predefined adaptation speed, e.g., given by the temporal variability of the utterances of a speaker. In result, short-term erroneous analysis data have no severe impact on the synthesized speech signals and phase discontinuities are avoided.

According to one embodiment of the invention the controlling means comprises a first and a second control unit, and wherein the first control unit is configured to generate at least one event signal, if at least one particular condition is fulfilled, and controls the mapping means to obtain at least one wideband parameter, only if an event signal is generated, the second control unit is configured to receive the at least one event signal and the at least one wideband parameter and modifies the nominal values for parameters needed to generate highband and/or lowband audio signals, only if at least one event signal is received.

The first and second control unit may be distinguished from each other logically and/or physically. The second control unit may control the audio signal generating means on the cycle rate basis, but it modifies the nominal values for the audio generating means on the event signal basis only, i.e. with a rate (event rate) lower than the cycle rate, and only if an event signal has been generated by the first control unit.

The at least one particular condition may be given by the value of the at least one bandlimited parameter exceeds a pre-determined limit, or the difference between the values of the at least one bandlimited parameter for two subsequent pulses of the event rate exceeds a pre-determined limit, or a pre-determined number of cycle rates is exceeded. Besides geometric distance measures for vector quantities, e.g. the Euclidian distance, psychoacoustic distance measures may also be employed.

Furthermore, the analyzing means and/or the controlling means may generate reliability code numbers used for the controlling of the audio signal generating means. If the analyzing means provides reliability code numbers for the different analysis results the controlling means can obtain combined confidence information on the parameters used for the generation of the highband/lowband audio signals.

Additionally, the controlling means can generate its own reliability code numbers. If, e.g., a high reliability for an estimated pitch is indicated by different analyzing tools, the control unit may decide to control the signal generating means to generate audio signals without any or with only little further smoothing. Also different influences on the re-calculation of wideband parameters might be weighted according to the respective reliability numbers.

Moreover, it might be desirable to pre-determine limits for the reliability code numbers. If the actual reliability code numbers for a result of an analyzing process falls below the pre-determine limit (if a small number means a low confidence level), no adaptation of the wideband parameters and accordingly, no modification of the nominal values calculated to control the signal processing means might be carried out.

According to one advantageous embodiment of the inventive system the mapping means comprises code books and/or artificial neural networks providing the correlation between the at least one bandlimited parameter and the at least one wideband parameter.

Advantageously, a pair of code books may be used. The first code book of this pair has to be trained with bandlimited sample vectors for the spectral envelope and the second code book has to be trained with wideband vectors. The training may be based on vector quantization method. For the actually analyzed speech signal the closest element, e.g. comprising the LPC coefficients, of the bandlimited code book is determined. A mapping to the associate vector of the wideband code book allows for determining, e.g., the parameters to be used for the estimate of the wideband spectral envelope.

Alternatively, or in addition to the code books, other means for a non-linear mapping of the closest sample of an analyzed bandlimited speech signal to a wideband speech signal may enclose artificial neural networks.

Before the non-linear mapping some transform of the obtained wideband parameters, e.g., the LPC coefficients, may be performed. The transform to line-spectral frequencies or to cepstral coefficients represent advantageous implementations.

The audio signal generating means of the inventive system can comprise sine generators or by sine generators and noise generators.

Also, it is provided by the present invention a hands-free system and, in particular, a hands-free system for use in a vehicle comprising the inventive system as described above.

Furthermore the present invention relates to a method for generating a wideband audio signal from a bandlimited audio signal, comprising the steps of receiving and analyzing a bandlimited audio signal at a transmission cycle rate and obtaining at least one bandlimited parameter at the transmission cycle rate, assigning at least one wideband parameter to the at least one bandlimited parameter, generating a highband and/or lowband audio signal on the basis of the at least one wideband parameter at the transmission cycle rate and combining the bandlimited audio signal and the highband and/or lowband audio signal generated by the audio signal generating means to a wideband audio signal at the transmission cycle rate.

The assigning of the at least one wideband parameter to the at least one bandlimited parameter is carried out at an event rate that is lower than the transmission cycle rate, and only if at least one particular condition is fulfilled.

According to one embodiment of the inventive method the at least one wideband parameter is assigned to the at least one bandlimited parameter by utilizing code books and/or artificial networks.

According to one advantageous embodiment of the inventive method nominal values for parameters, in particular, frequency and amplitude, are used to generate highband and/or lowband audio signals, and these nominal values are modified based on the at least one wideband parameter at the event rate. Also the audio signal generating means may adapt to the nominal values with a limit maximum increment for every transmission cycle.

The at least one event signal may be generated, if at least one particular condition is fulfilled, and the at least one wideband parameter may be assigned to the at least one bandlimited parameter and the nominal values for parameters needed to generate highband and/or lowband audio signals may only be modified, if an event signal is generated.

The at least one particular condition employed in the inventive method may be fulfilled, if the value of the at least one bandlimited parameter exceeds a pre-determined limit, or if the difference between the values of the at least one bandlimited parameter for two subsequent pulses of the event rate, e.g. the difference between the current analysis value and the value determined at the last event, exceeds a pre-determined limit, or if a pre-determined number of cycle rates is exceeded.

One embodiment of the inventive method further comprises calculating reliability code numbers for the obtained at least one bandlimited parameter and/or a combination of more than one of the at least one bandlimited parameter and/or the at least one wideband parameter and/or a combination of more than one of the at least one wideband parameter and wherein the reliability code numbers are used for controlling the audio signal generating means.

The highband and/or lowband audio signals may be generated at the cycle rate by sine generators or by sine generators and noise generators

Furthermore, the present invention provides a computer program product, comprising one or more computer readable media having computer-executable instructions for performing the steps of the inventive method for speech processing of bandlimited speech communication with bandwidth extension by synthetic speech signal generators working in a pulse-based manner.

Additional features and advantages of the present invention will be described with reference to the drawings. In the description, reference is made to the accompanying figures that are meant to illustrate preferred embodiments of the invention. It is understood that such embodiments do not represent the full scope of the invention which is defined by the claims given below.

Figure 1 shows the principal structure of one embodiment of the inventive system comprising a signal pre-processing means, two control units, a non-linear mapping means, signal generating means and a wideband synthesizing means.

Figure 2 shows an embodiment of the inventive system comprising means for extracting the spectral envelope from the bandlimited signal, means for performing a pitch and a power analysis, two control units, a pair of code books, sine and a noise generator and a wideband synthesizing means.

Figure 3 shows a flow diagram of the inventive method comprising, in particular, the steps of determining a bandlimited spectral envelope, generating an event signal, estimating a wideband spectral envelope and generating a highband/lowband speech signal.

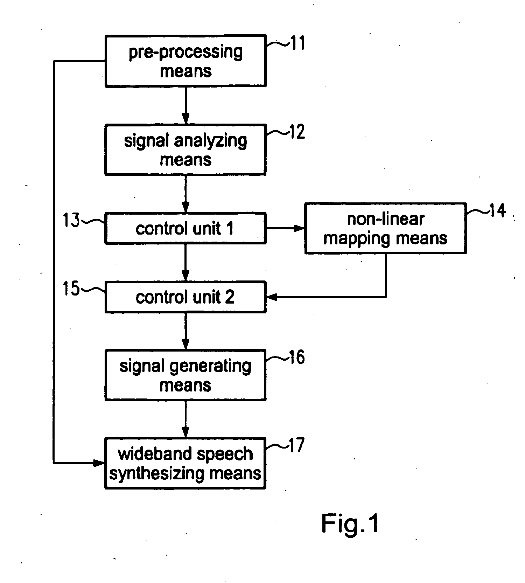

Figure 1 illustrates basic elements of the inventive system for bandwidth extension of bandlimited audio, in particular, speech signals thereby improving, e.g., bandlimited speech communication. In the following embodiments of the present invention for application in speech communication systems are described. Modifications for a more general audio signal processing can be performed in a straightforward way.

A bandlimited speech signal is pre-processed by a pre-processing means 11. This means may simply send the detected bandlimited speech signal to the signal analyzing means 12 and to the wideband speech synthesizing means or combination means 17.

Alternatively, it may be advantageous that the pre-processing bandlimited speech signal is converted to the desired bandwidth, by increasing the sample rate, without, however, generating additional frequency ranges. If, for example, a bandlimited signal is sampled at 8 kHz it may be input in an interpolation means for pre-processing which outputs the signal at a sampling frequency of 16 kHz. If the sample rate is increased, it is preferred to employ further a band-pass filter that allows transmission of the frequency range of the received bandlimited signal only to the wideband speech synthesizing or combination means 17.

The signal analyzing means 12 works on a transmission cycle rate basis and preferably comprises a means for extracting the bandlimited spectral envelope from the pre-processed speech signal. It may be preferred to employ the robust method of Linear Predictive Coding (LPC) in order to calculate a predictive error filter. The coefficients of the predictive error filter can be used for a parametric determination of the bandlimited spectral envelope.

Alternatively, one may employ models for spectral envelope representation that are based on line spectral frequencies or cepstral coefficients or mel-frequency cepstral coefficients.

As known from the art, the optimization problem for the predictive error can be formulated by a linear equation system incorporating an autocorrelation matrix. An efficient algorithm for the solution of this algebraic equation systems is the Levinson-Durbin algorithm that may be employed in an embodiment according to the present invention. The processor load for performing an LPC analysis by using the Levinson-Durbin algorithm is lower than the load of a standard FFT, but still considerably high.

It may be preferred, however, to employ instead an iterative algorithm which, e.g., can be based on the Least Mean Square method in order to reduce the processor load. If the signal processing is performed with the Fourier transformed time signals *X(f),* the spectral envelope may be modeled on the basis of the all-pole transmission function *W(f)* in frequency *(f)* space $W \left(f\right) = {\left(1-{\sum }_{k = 1}^{M} {a}_{k} ⋅ exp \left(-2⋅π⋅i⋅f⋅k⋅t\right)\right)}^{- 1} X \left(f\right) = W \left(f\right) ⋅ E \left(f\right)$ with the time delay *k·t* of the *m*-th signal out of *M* samples and where the *aₖ* and *E(f)* denote the predictive coefficients and the error signal, respectively. The associated model is known as the Auto-Regressive Model which can be employed in the present invention as a highly efficient recursive method for the calculation of the bandlimited spectral envelope.

Also, the signal analyzing means 12 may comprise a means for estimating the wideband excitation signal which may be done by means of non-linear characteristic lines as known from the art. This wideband excitation signal represents the signal that would be detected immediately at the vocal chords, i.e., without modifications by the whole vocal tract, and is commonly known as the glottal signal. The estimated wideband excitation signal can subsequently be shaped by the estimated wideband spectral envelope (see below) in order to obtain a synthesized wideband signal.

Additional signal analyzing means that may be incorporated are means for determining the actual SNR, the short time power of the excitation signal, the formants, the pitch, the high-pass-to-low-pass power ratio or for a classification based on voiced and unvoiced portions of the detected verbal utterance.

Each of the components of the speech analyzing means may also output reliability code numbers. These are, in general, scalar numbers, e.g. ranging from 0 to 1, that measure the confidence level of the estimated parameters, e.g., the pitch.

The results and reliability code numbers obtained by the signal analyzing means 12 are received by a first control unit 13. Based on the received data the first control unit 13 generates event signals. An event signal is usually generated when some pre-determined condition is fulfilled. Reasonable conditions comprise the exceeding of a well-defined distance measure, such as the Euclidian distance, or a simple difference between those parameters that were obtained at the time of the last generation of an event signal (see below) and the parameters that actually are obtained by the signal analyzing means 12.

The first control unit 13 advantageously does not work on the transmission cycle rate basis but is only active with a variable rate lower than the transmission cycle rate. On the other hand, it may be desirable to enforce the generation of an event signal every n_{H} > 1 cycle periods in order to avoid some freezing of the control.

It may be desirable that new reliability code numbers are calculated after the results of all of the components of the speech analyzing means 12 have been obtained. Since the control unit 13 receives all these data, it may provide a combined estimate of the confidence level(s) of the analysis data. Moreover, the individual reliability code numbers obtained by different components of the signal analyzing means 12 can be used by the control unit 13 in order to obtain new reliability code numbers.

The first control unit 13 also may be capable to generate at least one event signal indicating that the actual analysis data demands for a modification of the wideband speech synthesizing. If an event signal is generated by the first control unit 13, which, e.g., indicates a temporal change of the bandlimited spectral envelope, a new estimation of the wideband parameters, e.g., the wideband LPC coefficients, corresponding to the changed bandlimited parameters becomes necessary.

It may be preferred that the estimation of the wideband parameters on the basis of the calculated bandlimited parameters is performed by some non-linear mapping means 14. According to one embodiment, pairs of code books are used to assign wideband parameters contained in one code book to bandlimited parameters contained in another code book. Generally speaking, the bandlimited speech signal is analyzed and the closest representation in the bandlimited code book is identified. The corresponding wideband signal representation is then determined and used to synthesize the wideband speech signal.

In principle, it may be preferred to synthesize the whole wideband signal or, alternatively, to add the synthesized speech signal portion outside the bandwidth of the bandlimited signal, i.e. the highband and lowband speech signals, to the detected and analyzed bandlimited signal.

Artificial neural networks can be used complementary to or in substitution of code books as a non-linear mapping means 14. The weights of such networks have to be trained off-line before usage, but some kind of online training in connection with individual reliability code numbers is envisaged.

Whereas artificial neural networks and code books require training, depending on the actual application and implementation, it might be sufficient to use a method that does not require any training as, e.g., the Yasukawa approach that is based on the linear extrapolation of the spectral slope of the bandlimited spectral envelope to the upper band.

The obtained wideband parameters as well as the event signal are received by a second control unit 15 that is provided to control the signal generating means 16 by determining new nominal values for the speech signal synthesis. The second control unit 15 can be logically and/or physically separated from the first control unit 13.

If, e.g., a new pitch has been estimated by the signal analyzing means 12, and accordingly an event signal has been generated by the first control unit 13, the second control unit is provided by a new wideband extension of the analyzed speech signal and consequently, the second control unit 15 adjusts nominal values for the signal generating means 16.

Additionally, it may be desirable that the second control unit 15 provides the signal generating means 16 with information about the confidence levels of the estimated wideband parameters and/or limits for the speed of revision of signal synthesizing to avoid discontinuities in, e.g., the generated sine tones.

For example, a parameter Δ_{i,max} may be defined and used to control the i-th sine generator to change the actual value of the frequency each cycle rate by Δ_{i,max} at maximum. Moreover, defining Δ_{i,min} < Δ_{i,max} and employing a confidential code number 0 ≤ Cᵢ ≤ 1 (a small number stands for a low confidence level) for the frequency change, the maximum speed of revision with respect to a frequency change of the i-th sine generator may be measured by Δ_{i,min} = Δ_{i.min} + Cᵢ(Δ_{i,max} - Δ_{i,min}).

It is of importance to note that, whereas the signal generating means 16 are provided with control signals by the second control unit 15 that may change on the basis of event signals, the signal generating means 16 works at the transmission cycle rate.

The signal generating means 16 adapt to the nominal values obtained by the preceding analysis with a limited adaptation speed, e.g., based on the physical generation of natural speech.

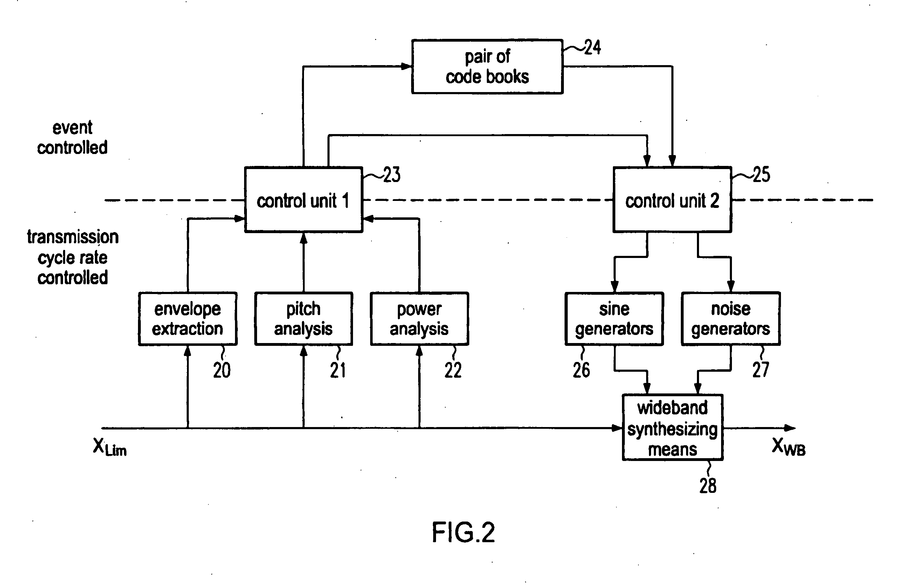

Figure 2 illustrates one advantageous embodiment of the inventive system. The means depicted below the dashed line work on a transmission cycle rate basis, whereas the ones depicted above the dashed line work on an event signal basis.

A bandlimited speech signal Xₗᵢₘ is detected and then received by a signal analysis means comprising components configured for extracting the bandlimited spectral envelope 20, for pitch analyzing 21 and for determining the power of the bandlimited excitation signal 22. The components of the signal analysis means 20, 21 and 22 can exchange data with each other.

The control parameters for the sine generators 26 preferably comprise a pitch frequency parameter. This parameter can be obtained by the pitch analyzing means, e.g., by performing an inverse FFT on the logarithm of the spectrum thereby generating a cepstral signal. The pitch of the verbal utterance appears as a peak in the cepstral signal which can be detected by some peak picking algorithm known from the art. Amplitudes for the sine and frequencies responses for the noise generators are obtained from the generated broadband spectral envelope.

The first control unit 23 receives the data obtained by the analyzing means 20, 21 and 22 and decides whether the synthesizing of the wideband speech signal is to be modified. It may be advantageous to have different rates for generating event signals by the first control unit 23 for different parameters. In any case the rate of generating event signals should advantageously be lower than the transmission cycle rate.

If the first control unit 23 generates an event signal due to, e.g., a change of cepstral coefficients compared to the set of cepstral coefficients that was determined the last time a cepstral event signal was generated with a distance measure exceeding some pre-determined limit, a pair of code books 24 may be used to estimate wideband parameters that are necessary to generate a modified wideband speech signal. By means of the code books 24 the wideband spectral envelope for a given determined bandlimited one can be estimated (see above).

Based on the data received from the first control unit 23 and the code books 24, the second control unit 25 controls sine generators 26 and noise generators 27 to generate lowband and highband (as compared to the limited bandwidth of the received signal X_{Lim}) speech signals. Both generators work on a transmission cycle rate basis. The second control unit 25 not only determines new nominal values for the generators 26 and 27 but also outputs reliability code numbers and limits for the speed of revision of signal synthesizing.

The sine generators may synthesize the lowband extension in a frequency range of 30 - 300 Hz and in the highband extension in a frequency range from 3,4 kHz to a predefined freqeuncy and the speech signal generation may be mainly based on the pitch frequency and integer multiples thereof.

A wideband synthesizing means 28 receives at the transmission cycle rate the bandlimited signals X_{Lim} as well as the signals generated by the sine generators 26 and the noise generator 27 to synthesize the final wideband speech signals X_{WB}. According to one preferred embodiment this means 28 may comprise band-stop filters for the synthetically generated signals and just adds these filtered signals to the unmodified bandlimited signals X_{Lim} to obtain the wideband speech signals X_{WB}.

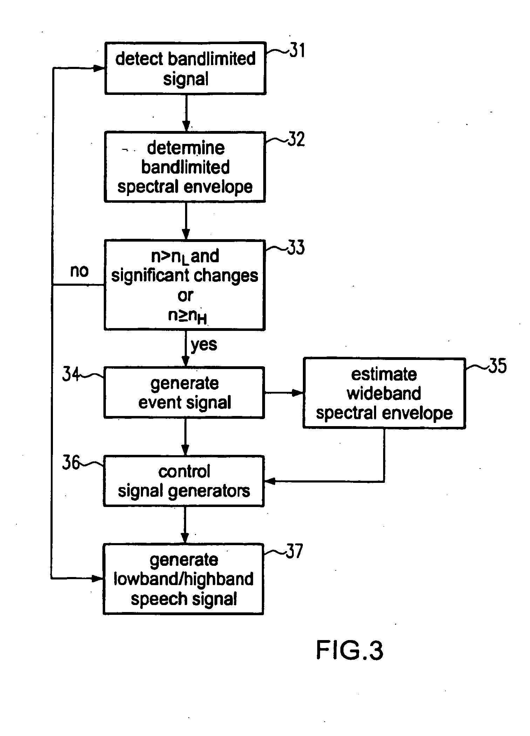

Figure 3 illustrates basic steps of the inventive method. A bandlimited signal is detected 31 and subsequently analyzed. The implemented algorithms preferably work in a recursive manner and on the transmission cycle rate basis. In particular, the bandlimited spectral envelope is determined 32, e.g., by performing an LPC analysis. The bandlimited parameters for a parametric description of the bandlimited spectral envelope and reliability code numbers are output to a control unit.

This control unit checks 33, whether generation of an event signal is enforced (*n ≥ n_{H}*) or whether a pre-determined integer multiple *n_{L}* of the cycle time is exceeded by the time period (n times the cycle time) elapsed since the last generation of an event signal. If *n* > *n_{L},* it is checked further, whether significant changes in the bandlimited parameters, in particular, the parameters for the bandlimited spectral envelope have occurred 33. A significant change occurs, if some pre-determined distance measure is exceed by the (vector) differences between actual bandlimited parameters, e.g., LPC coefficients for modeling the spectral envelope, and the respective parameters that were determined the last time an event was generated, or if one parameter exceeds a pre-determined threshold.

If *n < n_{L}* or no significant changes of the bandlimited parameters have been determined, the lowband and highband speech signals are generated 37 with a pre-determined speed of adaptation to the nominal control parameters. In the contrary case, a new event signal is generated 34 and the wideband spectral envelope corresponding to the bandlimited one is estimated 35. For this purpose a pair of code books may be used. The first code book of this pair has been trained with bandlimited sample vectors for the spectral envelope and the second code book has been trained with wideband vectors. The training may be based on a vector quantization method as, e.g., the Linde-Buzo-Gray design scheme based on the Euclidian or any other distance of code words.

After having determined the bandlimited parameters for the bandlimited spectral envelope 32, the parameter vector is assigned to the vector of the bandlimited code book with the smallest distance to this parameter vector. As a distance measure, e.g., the Itakuro-Saito distance measure may be used. The vector determined in the bandlimited code book is mapped to the corresponding vector of the wideband code book 35, which in course is employed for synthesizing the wideband speech signal.

Using, among others, the information of the event signal, in particular, on what wideband parameters have to be updated, and the parameters for the wideband spectral envelope, the signal generators are controlled 36 to generate the lowband and highband speech portions 37 missing in the detected 31 and analyzed bandlimited speech signal.

Sine generators are typically controlled to adapt to nominal values for amplitudes and frequencies and noise generators are typically controlled to adapt to the power of a spectral envelope. Different from the steps 33- 35 the generation of the lowband and highband speech signal is performed on a cycle rate basis. Whereas the signal generators work continuously with their actual values the nominal values are modified on an event signal basis, i.e. only every *n_{H}* > *n* > *n_{L}≥*1 times the cycle time periods.

All previously discussed embodiments are not intended as limitations but serve as examples illustrating features and advantages of the invention. It is to be understood that some or all of the above described features can also be combined in different ways. Whereas the described embodiments relate to speech signal processing, they easily can be modified within the scope of the invention to be applicable to audio signal processing in general.

## Claims

1. System for bandwidth extension of bandlimited audio signals, comprising
analyzing means (12) configured to analyze bandlimited audio signals at a transmission cycle rate and to obtain at least one bandlimited parameter at the transmission cycle rate,
mapping means (14) configured to obtain at least one wideband parameter based on the at least one bandlimited parameter,
an audio signal generating means (16) configured to generate a highband and/or lowband audio signal at the transmission cycle rate on the basis of the at least one wideband parameter;
**characterized by**
a controlling means configured to receive the at least one bandlimited parameter and to control the mapping means (14) to obtain at least one wideband parameter at an event rate that is lower than the transmission cycle rate, and only if at least one particular condition is fulfilled.

2. System according to Claim 1, wherein
the bandlimited parameters comprise characteristic parameters for the determination of bandlimited spectral envelopes and/or the pitch and/or the short-time power and/or the highband-pass-to-lowband-pass power ratio and/or the signal-to-noise ratio, and
the wideband parameters comprise wideband spectral envelopes and/or characteristic parameters for the determination of wideband spectral envelopes and/or wideband excitation signals.

3. System according to Claim 1 or 2, further comprising
combination means (17) configured to receive the bandlimited audio signal and the highband and/or lowband audio signal generated by the audio signal generating means (16) at the transmission cycle rate and to combine the bandlimited audio signal and the highband and/or lowband audio signal to a wideband audio signal at the transmission cycle rate.

4. System according to one of the preceding claims, wherein the controlling means controls the audio signal generating means (16) to adapt to nominal values for parameters, in particular, frequency, phase and amplitude, that are needed to generate highband and/or lowband audio signals, and wherein the nominal values are modified based on the at least one wideband parameter at the event rate.

5. System according to one of the preceding claims, wherein the audio signal generating means (16) are controlled to adapt to the nominal values with a limit maximum increment for every transmission cycle, wherein the maximum increment, in particular, is based on the temporal variability of speech generation.

6. System according to one of the Claims 1, 4 or 5, wherein the controlling means comprises a first and a second control unit (15), and wherein
the first control unit (13) is configured to generate at least one event signal, if at least one particular condition is fulfilled, and controls the mapping means (14) to obtain at least one wideband parameter, only if an event signal is generated,
the second control unit (15) is configured to receive the at least one event signal and the at least one wideband parameter and modifies the nominal values for parameters needed to generate highband and/or lowband audio signals, only if at least one event signal is received.

7. System according to one of the Claims 1, 4, 5 or 6, wherein the at least one particular condition is given by:
the value of the at least one bandlimited parameter exceeds a pre-determined limit, or
the difference between the values of the at least one bandlimited parameter for two subsequent pulses of the event rate exceeds a pre-determined limit, or
a pre-determined number of transmission cycle rates is exceeded.

8. System according to one of the preceding claims, wherein the analyzing means and/or the controlling means generate reliability code numbers used for the controlling of the audio signal generating means (16).

9. System according to one of the preceding claims, wherein the mapping means (14) comprises code books and/or artificial neural networks providing the correlation between the at least one bandlimited parameter and the at least one wideband parameter.

10. System according to one of the preceding claims, wherein the audio signal generating means (16) comprises sine generators (26) and noise generators (27).

11. Method for generating a wideband audio signal from a bandlimited audio signal, comprising
receiving and analyzing a bandlimited audio signal at a transmission cycle rate and obtaining at least one bandlimited parameter at the transmission cycle rate,
assigning at least one wideband parameter to the at least one bandlimited parameter,
generating a highband and/or lowband audio signal at the transmission cycle rate on the basis of the at least one wideband parameter and
combining the bandlimited audio signal and the highband and/or lowband audio signal generated by an audio signal generating means (16) to a wideband audio signal at the transmission cycle rate:
**characterized in that**
the step of assigning the at least one wideband parameter to the at least one bandlimited parameter is carried out at an event rate that is lower than the transmission cycle rate, and only if at least one particular condition is fulfilled.

12. Method according to Claim 11, wherein
the bandlimited parameters comprise characteristic parameters for the determination of bandlimited spectral envelopes and/or the pitch and/or the short-time power and/or the highband-pass-to-lowband-pass power ratio and/or the signal-to-noise ratio, and
the wideband parameters comprise wideband spectral envelopes and/or characteristic parameters for the determination of wideband spectral envelopes and/or wideband excitation signals.

13. Method according to Claim 11 or 12, wherein the at least one wideband parameter is assigned to the at least one bandlimited parameter by utilizing code books and/or artificial networks.

14. Method according to one of the Claims 11 - 13, wherein nominal values for parameters. In particular, frequency and amplitude, are used to generate highband and/or lowband audio signals, and wherein these nominal values are modified based on the at least one wideband parameter at the event rate.

15. Method according to Claim 14, wherein the audio signal generating means (18) adapts to the nominal values with a limit maximum increment for every transmission cycle, wherein the maximum Increment, in particular, is based on the temporal variability of speech generation.

16. Method according to Claims 14 or 15, wherein
at least one event signal is generated, if at least one particular condition is fulfilled, and
the at least one wideband parameter is assigned to the at least one bandlimited parameter and the nominal values for parameters needed to generate highband and/or lowband audio signals are only modified, if an event signal is generated.

17. Method according to one of the Claims 11 - 16 wherein the at least one particular condition is fulfilled, if the difference between the values of the at least one bandlimited parameter for two subsequent pulses of the event rate exceeds a pre-determined limit or if a pre-determined number of transmission cycle rates is exceeded.

18. Method according to one of the Claims 11 - 17 further comprising
calculating reliability code numbers for the obtained at least one bandlimited parameter and/or a combination of more than one of the at least one bandlimited parameter and/or the at least one wideband parameter and/or a combination of more than one of the at least one wideband parameter and wherein the reliability code numbers are used for controlling the audio signal generating means (16).

19. Method according to one of the Claims 11 - 18, wherein the highband and/or lowband audio signals are generated at the cycle rate by sine generators (26) and noise generators (27).

20. Computer program product, comprising one or more computer readable media having computer-executable Instructions for performing the steps of the method according to one of the Claims 11 - 19, when run on a computer.

## Patentansprüche

1. System zur Bandbreitenerweiterung von bandbeschränkten Audiosignalen, das umfasst
eine Analyseeinrichtung (12), die dazu ausgebildet ist, bandbeschränkte Audiosignale mit einer Sendezylusrate zu analysieren und zumindest einen bandbeschränkten Parameter mit der Sendezylusrate zu erhalten,
eine Abbildungseinrichtung (14), die dazu ausgebildet ist, zumindest einen Breitbandparameter auf der Grundlage des zumindest einen bandbeschränkten Parameters zu erhalten,
eine Audiosignalerzeugungseinrichtung (16), die dazu ausgebildet ist, mit der Sendezylusrate ein Hochband- und/oder Tiefbandaudiosignal auf der Grundlage des zumindest einen Breitbandparameters zu erzeugen;
**gekennzeichnet durch**
eine Steuereinrichtung, die dazu ausgebildet ist, den zumindest einen bandbeschränkten Parameter zu empfangen und die Abbildungseinrichtung (14) dahingehend zu steuern, dass sie zumindest einen Breitbandparameter mit einer Ereignisrate, die niedriger als die Sendezylusrate ist, und nur, wenn zumindest eine bestimmte Bedingung erfüllt ist, erhält.

2. System gemäß Anspruch 1, in dem
die bandbeschränkten Parameter charakteristische Parameter zur Bestimmung von bandbeschränkten spektralen Einhüllenden und/oder der Tonhöhe und/oder der Kurzzeitleistung und/oder des Verhältnisses von Hochbandpass-zu-Niedrigbandpass-Leistung und/oder des Signal-zu-Rausch-Verhältnisses umfassen, und
die Breitbandparameter breitbandige spektrale Einhüllende und/oder charakteristische Parameter zur Bestimmung von breitbandigen spektralen Einhüllenden und/oder von Breitbandanregungssignalen umfassen.

3. System gemäß Anspruch 1 oder 2, das weiterhin umfasst
eine Kombinationseinrichtung (17), die dazu ausgebildet ist, das bandbeschränkte Audiosignal und das Hochband- und/oder Tiefbandaudiosignal, das von der Audiosignalerceugungseinrichtung (16) mit der Sendezyklusrate erzeugt wird, zu empfangen und das bandbeschränkte Audiosignal und das Hochband- und/oder Tiefbandaudiosignal mit der Sendezyklusrate zu einem Breitbandsignal zu kombinieren.

4. System gemäß einem der vorhergehenden Ansprüche, in dem die Steuereinrichtung die Audiosignalerzeugungseinrichtung (16) dahingehend steuert, dass sie sich Nominalwerten für Parameter, insbesondere der Frequenz, Phase und Amplitude, anpasst, die dafür erforderlich sind, Hochband- und/oder Tiefbandaudiosignale zu erzeugen, und wobei die Nominalwerte auf der Grundlage des zumindest einen Breitbandparameters mit der Ereignisrate verändert werden.

5. System gemäß einem der vorhergehenden Ansprüche, in dem die Audiosignalerzeugungseinrichtung (16) dahingehend gesteuert wird, dass sie sich den Nominalwerten mit einem limitierten maximalen Inkrement für jeden Sendezyklus anpasst, wobei das maximale Inkrement insbesondere auf der zeitlichen Variabilität der Spracherzeugung basiert.

6. System gemäß einem der Ansprüche 1, 4 oder 5, in dem die Steuereinrichtung eine erste und eine zweite Steuereinheit (15) umfasst, und in dem
die erste Steuereinheit (13) dazu ausgebildet ist, zumindest ein Ereignissignal zu erzeugen, wenn zumindest eine bestimmte Bedingung erfüllt ist, und die Abbildungseinrichtung (14) dahingehend zu steuern, dass sie nur dann zumindest einen Breitbandparameter erhält, wenn ein Ereignissignal erzeugt wird,
die zweite Steuereinheit (15) dazu ausgebildet ist, das zumindest eine Ereignissignal und den zumindest einen Breitbandparameter zu empfangen, und sie die Nominalwerte für Parameter, die dafür erforderlich sind, Hochband- und/oder Tiefbandaudiosignale zu erzeugen, nur ändert, wenn zumindest ein Ereignissignal empfangen wird.

7. System gemäß einem der Ansprüche 1, 4, 5 oder 6, in dem die zumindest eine bestimmte Bedingung **dadurch** gegeben ist, dass:
der Wert des zumindest einen bandbeschränkten Parameters eine vorbestimmte Grenze überschreitet, oder
die Differenz zwischen den Werten des zumindest einen bandbeschränkten Parameters für zwei aufeinanderfolgende Pulse der Ereignisrate eine vorbestimmte Grenze überschreitet, oder
eine vorbestimmte Anzahl an Sendezyklusraten überschritten wird.

8. System gemäß einem der vorhergehenden Ansprüche, in dem die Analyseeinrichtung und/oder die Steuereinrichtung Verlässlichkeit - Codezahlen erzeugen, die für das Steuern der Audiosignalerzeugungseinrichtung (16) verwendet werden.

9. System gemäß einem der vorhergehenden Ansprüche, in dem die Abbildungseinrichtung (14) Code - Bücher und/oder künstliche neuronale Netzwerke umfasst, die die Korrelation zwischen dem zumindest einen bandbeschränkten Parameter und dem zumindest einen Breitbandparameter zur Verfügung stellen.

10. System gemäß einem der vorhergehenden Ansprüche, in dem die Audiosignalerzeugungseinrichtung (16) Sinus - Generatoren (26) und Geräuschgeneratoren (27) umfasst.

11. Verfahren zum Erzeugen eines Breitbandaudiosignals aus einem bandbeschränkten Audiosignal, das umfasst
Empfangen und Analysieren eines bandbeschränkten Audiosignals mit einer Sendezylusrate und Erhalten von zumindest einem bandbeschränkten Parameter mit der Sendezylusrate,
Zuweisen von zumindest einem Breitbandparameter zu dem zumindest einen bandbeschränkten Parameter,
Erzeugen eines Hochband- und/oder Tiefbandaudiosignals mit der Sendezylusrate auf der Grundlage des zumindest einen Breitbandparameters;
Kombinieren des bandbeschränkten Audiosignals und des Hochband- und/oder Tiefbandaudiosignals, die von einer Audiosignalerzeugungseinrichtung (16) erzeugt werden, zu einem Breitbandaudiosignal mit der Sendezylusrate;
**dadurch gekennzeichnet, dass**
der Schritt des Zuweisens des zumindest einem Breitbandparameters zu dem zumindest einen bandbeschränkten Parameter mit einer Ereignisrate, die niedriger als die Sendezyklusrate ist, nur dann, wenn zumindest eine bestimmte Bedingung erfüllt ist, ausgeführt wird.

12. Verfahren gemäß Anspruch 11, in dem
die bandbeschränkten Parameter charakteristische Parameter zur Bestimmung von bandbeschränkten spektralen Einhüllenden und/oder der Tonhöhe und/oder der Kurzzeitleistung und/oder des Verhältnisses von Hochbandpass-zu-Niedrigbandpass-Leistung und/oder des Signal-zu-Rausch-Verhältnisses umfassen, und
die Breitbandparameter breitbandige spektrale Einhüllende und/oder charakteristische Parameter zur Bestimmung von breitbandigen spektralen Einhüllenden und/oder von Breitbandanregungssignalen umfassen.

13. Verfahren gemäß Anspruch 11 oder 12, in dem der zumindest eine Breitbandparameter dem zumindest einen bandbeschränkten Parameter durch Verwenden von Code - Büchern und/oder künstlichen Netzwerken zugewiesen wird.

14. Verfahren gemäß einem der Ansprüche 11 - 13, in dem Nominalwerte für Parameter, insbesondere der Frequenz, Phase und Amplitude, verwendet werden, um Hochband- und/oder Tiefbandaudiosignale zu erzeugen, und in dem diese Nominalwerte auf der Grundlage des zumindest einen Breitbandparameters mit der Ereignisrate verändert werden.

15. Verfahren gemäß Anspruch 14, in dem sich die Audiosignalerzeugungseinrichtung (16) den Nominalwerten mit einem limitierten maximalen Inkrement für jeden Sendezyklus anpasst, wobei das maximale Inkrement insbesondere auf der zeitlichen Variabilität der Spracherzeugung basiert.

16. Verfahren gemäß Anspruch 14 oder 15, in dem
zumindest ein Ereignissignal erzeugt wird, wenn zumindest eine bestimmte Bedingung erfüllt ist, und
der zumindest eine Breitbandparameter dem zumindest einen bandbeschränkten Parameter zugewiesen wird und die Nominalwerte für Parameter, die dafür erforderlich sind, Hochband- und/oder Tiefbandaudiosignale zu erzeugen, lediglich verändert werden, wenn ein Ereignissignal erzeugt wird.

17. Verfahren gemäß einem der Ansprüche 11 - 16, in dem die zumindest eine Bedingung erfüllt wird, wenn die Differenz zwischen den Werten des zumindest einen bandbeschränkten Parameters für zwei aufeinanderfolgende Pulse der Ereignisrate eine vorbestimmte Grenze überschreitet, oder wenn eine vorbestimmte Anzahl an Sendezyklusraten überschritten wird.

18. Verfahren gemäß einem der Ansprüche 11 - 17, das weiterhin umfasst
Berechnen von Verlässlichkeit - Codezahlen für den erhaltenen zumindest einen bandbeschränkten Parameter und/oder eine Kombination von mehr als einen des zumindest einen bandbeschränkten Parameters und/oder den zumindest einen Breitbandparameter und/oder eine Kombination von mehr als einen des zumindest einen Breitbandparameters, und wobei die Verlässlichkeit - Codezahlen zum Steuern der Audiosignalerzeugungseinrichtung (16) verwendet werden.

19. Verfahren gemäß einem der Ansprüche 11 - 18, in dem die Hochband- und/oder Tiefbandaudiosignale mit der Zyklusrate mit Sinus - Generatoren (26) und Geräuschgeneratoren (27) erzeugt werden.

20. Computerprogrammprodukt, das ein oder mehrere computerlesbare Medien umfasst, die computerausführbare Anweisungen zum Ausführen der Schritte des Verfahrens gemäß einem der Ansprüche 11 - 19 aufweisen, wenn es auf einem Computer laufengelassen wird.

## Revendications

1. Système pour étendre la bande passante de signaux audio à bande limitée, comprenant :
des moyens d'analyse (12) configurés pour analyser des signaux audio à bande limitée à une fréquence de cycle de transmission et pour obtenir au moins un paramètre de bande limitée à la fréquence de cycle de transmission,
des moyens de mappage (14) configurés pour obtenir au moins un paramètre large bande sur la base dudit au moins un paramètre de bande limitée,
un moyen de génération de signaux audio (16) configuré pour générer un signal audio de bande haute et / ou de bande basse à la fréquence de cycle de transmission sur la base dudit au moins un paramètre large bande ;
**caractérisé par**
un moyen de commande configuré pour recevoir ledit au moins un paramètre de bande limitée et pour commander les moyens de mappage (14) pour obtenir au moins un paramètre large bande à une fréquence d'événement qui est inférieure à la fréquence de cycle de transmission, et seulement si au moins une condition particulière est satisfaite.

2. Système selon la revendication 1, dans lequel
les paramètres de bande limitée comprennent des paramètres caractéristiques pour la détermination d'enveloppes spectrales à bande limitée et / ou de la tonie et / ou de la puissance à court terme et / ou du rapport de puissance entre la bande passante haute et la bande passante basse et / ou du rapport signal sur bruit, et
les paramètres large bande comprennent des enveloppes spectrales large bande et / ou des paramètres caractéristiques pour la détermination d'enveloppes spectrales large bande et / ou de signaux d'excitation large bande.

3. Système selon la revendication 1 ou 2, comprenant en outre :
des moyens de combinaison (17) configurés pour recevoir le signal audio à bande limitée et le signal audio de bande haute et / ou de bande basse générés par les moyens de génération de signaux audio (16) à la fréquence de cycle de transmission et pour combiner le signal audio à bande limitée et le signal audio de bande haute et / ou de bande basse en un signal audio large bande à la fréquence de cycle de transmission.

4. Système selon l'une des revendications précédentes, dans lequel les moyens de commande commandent les moyens de génération de signaux audio (16) pour s'adapter aux valeurs nominales des paramètres, en particulier, la fréquence, la phase et l'amplitude, qui sont nécessaires pour générer des signaux audio de bande haute et / ou de bande basse, et dans lequel les valeurs nominales sont modifiées sur la base dudit au moins un paramètre large bande à la fréquence d'événement.

5. Système selon l'une des revendications précédentes, dans lequel les moyens de génération de signaux audio (16) sont commandés pour s'adapter aux valeurs nominales avec un incrément maximum limite pour chaque cycle de transmission, dans lequel l'incrément maximum est, en particulier, basé sur la variabilité temporelle de la génération de parole.

6. Système selon l'une des revendications 1, 4 ou 5, dans lequel les moyens de commande comprennent des première et deuxième unités de commande (15), et dans lequel
la première unité de commande (13) est configurée pour générer au moins un signal d'événement, si au moins une condition particulière est satisfaite, et commande les moyens de mappage (14) pour obtenir au moins un paramètre large bande, seulement si un signal d'événement est généré,
la deuxième unité de commande (15) est configurée pour recevoir ledit au moins un signal d'événement et ledit au moins un paramètre large bande et modifie les valeurs nominales des paramètres nécessaires pour générer des signaux audio de bande haute et / ou de bande basse, seulement si au moins un signal d'événement est reçu.

7. Système selon l'une des revendications 1, 4, 5 ou 6, dans lequel ladite au moins une condition particulière est donnée par :
la valeur dudit au moins un paramètre de bande limitée dépasse une limite prédéterminée, ou
la différence entre les valeurs dudit au moins un paramètre de bande limitée pour deux impulsions subséquentes de la fréquence d'événement dépasse une limite prédéterminée, ou
un nombre prédéterminé des fréquences de cycle de transmission est dépassé.

8. Système selon l'une des revendications précédentes, dans lequel les moyens d'analyse et / ou les moyens de commande génèrent des numéros de codes de fiabilité utilisés pour la commande des moyens de génération de signaux audio (16).

9. Système selon l'une des revendications précédentes, dans lequel les moyens de mappage (14) comprennent des livres de codes et / ou des réseaux neuronaux artificiels fournissant la corrélation entre ledit au moins un paramètre de bande limitée et ledit au moins un paramètre large bande.

10. Système selon l'une des revendications précédentes, dans lequel les moyens de génération de signaux audio (16) comprennent des générateurs de sinus (26) et des générateurs de bruit (27).

11. Procédé pour générer un signal audio large bande à partir d'un signal audio à bande limitée, comprenant les étapes consistant à :
recevoir et analyser un signal audio à bande limitée à une fréquence de cycle de transmission et obtenir au moins un paramètre de bande limitée à la fréquence de cycle de transmission,
attribuer au moins un paramètre large bande audit au moins un paramètre de bande limitée,
générer un signal audio de bande haute et / ou de bande basse à la fréquence de cycle de transmission sur la base dudit au moins un paramètre large bande, et
combiner le signal audio à bande limitée et le signal audio de bande haute et / ou de bande basse générés par un moyen de génération de signaux audio (16) en un signal audio large bande à la fréquence de cycle de transmission ;
**caractérisé en ce que**
l'étape d'attribution dudit au moins un paramètre large bande audit au moins un paramètre de bande limitée est effectuée à une fréquence d'événement qui est inférieure à la fréquence de cycle de transmission, et seulement si au moins une condition particulière est satisfaite.

12. Procédé selon la revendication 11, dans lequel
les paramètres de bande limitée comprennent des paramètres caractéristiques pour la détermination d'enveloppes spectrales à bande limitée et / ou de la tonie et / ou de la puissance à court terme et / ou du rapport des puissances de bande passante haute et de bande passante basse et / ou du rapport signal sur bruit, et
les paramètres large bande comprennent des enveloppes spectrales large bande et / ou des paramètres caractéristiques pour la détermination d'enveloppes spectrales large bande et / ou de signaux d'excitation large bande.

13. Procédé selon la revendication 11 ou 12, dans lequel ledit au moins un paramètre large bande est attribué audit au moins un paramètre de bande limitée en utilisant des livres de codes et / ou des réseaux artificiels.

14. Procédé selon l'une des revendications 11 à 13, dans lequel des valeurs nominales pour des paramètres, en particulier, une fréquence et une amplitude, sont utilisées pour générer des signaux audio de bande haute et / ou de bande basse, et dans lequel ces valeurs nominales sont modifiées sur la base dudit au moins un paramètre large bande à la fréquence d'événement.

15. Procédé selon la revendication 14, dans lequel le moyen de génération de signaux audio (16) s'adapte aux valeurs nominales avec un incrément maximum limite pour chaque cycle de transmission, dans lequel l'incrément maximum est, en particulier, basé sur la variabilité temporelle de la génération de parole.

16. Procédé selon les revendications 14 ou 15, dans lequel
au moins un signal d'événement est généré, si au moins une condition particulière est satisfaite, et
ledit au moins un paramètre large bande est attribué audit au moins un paramètre de bande limitée et les valeurs nominales pour les paramètres nécessaires pour générer des signaux audio de bande haute et / ou de bande basse ne sont modifiées que si un signal d'événement est généré.

17. Procédé selon l'une des revendications 11 à 16, dans lequel ladite au moins une condition particulière est satisfaite, si la différence entre les valeurs dudit au moins un paramètre de bande limitée pour deux impulsions subséquentes de la fréquence d'événement dépasse une limite prédéterminée ou si un nombre prédéterminé des fréquences de cycle de transmission est dépassé.

18. Procédé selon l'une des revendications 11 à 17 comprenant en outre l'étape consistant à :
calculer des numéros de codes de fiabilité pour au moins le un paramètre de bande limitée obtenu et / ou une combinaison de plusieurs dudit au moins un paramètre de bande limitée et / ou dudit au moins un paramètre large bande et / ou une combinaison de plusieurs dudit au moins un paramètre large bande, et dans lequel les numéros de codes de fiabilité sont utilisés pour commander les moyens de génération de signaux audio (16).

19. Procédé selon l'une des revendications 11 à 18, dans lequel les signaux audio de bande haute et / ou de bande basse sont générés à la fréquence du cycle par des générateurs de sinus (26) et des générateurs de bruit (27).

20. Produit-programme informatique, comprenant un ou plusieurs supports pouvant être lus par un ordinateur comportant des instructions exécutables par un ordinateur pour effectuer les étapes du procédé selon l'une des revendications 11 à 19, lorsqu'il est exécuté sur un ordinateur.
